(19) Europäisches Patentamt
European Patent Office
Office européen des brevets

(11) EP 2 562 226 A1

# (12) EUROPEAN PATENT APPLICATION

published in accordance with Art. 153(4) EPC

(43) Date of publication:
**27.02.2013 Bulletin 2013/09**

(21) Application number: **11771900.5**

(22) Date of filing: **12.04.2011**

(51) Int Cl.:
***C09J 133/00*** *(2006.01)* ***C09J 7/02*** *(2006.01)*
***C09J 11/06*** *(2006.01)* ***C09J 171/02*** *(2006.01)*

(86) International application number:
**PCT/JP2011/059074**

(87) International publication number:
**WO 2011/132565 (27.10.2011 Gazette 2011/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010 JP 2010097234**
**20.04.2010 JP 2010097233**
**20.04.2010 JP 2010097232**

(71) Applicant: **Nitto Denko Corporation**
**Osaka 567-8680 (JP)**

(72) Inventors:
- **TAKASHIMA, Atsushi**
  **Ibaraki-shi**
  **Osaka 567-8680 (JP)**
- **AMANO, Tatsumi**
  **Ibaraki-shi**
  **Osaka 567-8680 (JP)**
- **MITSUI, Kazuma**
  **Ibaraki-shi**
  **Osaka 567-8680 (JP)**
- **YONEZAKI, Kousuke**
  **Ibaraki-shi**
  **Osaka 567-8680 (JP)**
- **TAKASHIMA, Kyoko**
  **Ibaraki-shi**
  **Osaka 567-8680 (JP)**
- **MORIMOTO, Yu**
  **Ibaraki-shi**
  **Osaka 567-8680 (JP)**

(74) Representative: **Grünecker, Kinkeldey,**
**Stockmair & Schwanhäusser**
**Leopoldstrasse 4**
**80802 München (DE)**

## (54) WATER-DISPERSIBLE ACRYLIC ADHESIVE AGENT COMPOSITION AND ADHESIVE SHEET

(57) Provided are a water-dispersible acrylic pressure-sensitive adhesive composition capable of forming a pressure-sensitive adhesive layer which has excellent resistance to increase in adhesive strength and a good appearance and less causes staining; and a pressure-sensitive adhesive sheet having a pressure-sensitive adhesive layer formed from the pressure-sensitive adhesive composition. The water-dispersible acrylic pressure-sensitive adhesive composition includes an acrylic emulsion polymer (A) formed from constitutive monomers essentially containing 70 to 99.5 percent by weight of a (meth)acrylic alkyl ester and 0.5 to 10 percent by weight of a carboxyl-containing unsaturated monomer; and a compound (B) represented by following Formula (I):

$$R^1O\text{-}(PO)_a\text{-}(EO)_b\text{-}(PO)_c\text{-}R^2 \quad (I)$$

wherein $R^1$ and $R^2$ each represent a linear or branched chain alkyl group or hydrogen atom; PO represents oxypropylene group; EO represents oxyethylene group; and "a," "b," and "c" are each a positive integer, where EO and POs are added in a block manner.

EP 2 562 226 A1

## Description

Technical Field

The present invention relates to water-dispersible acrylic pressure-sensitive adhesive compositions. Specifically, the present invention relates to water-dispersible acrylic pressure-sensitive adhesive compositions capable of forming pressure-sensitive adhesive layers which less suffer from appearance defects such as dimples and bubbles, have good appearances, and are satisfactorily resistant to increase in adhesive strength with time. The present invention also relates to pressure-sensitive adhesive sheets including pressure-sensitive adhesive layers formed from the pressure-sensitive adhesive compositions.

Background Art

Surface-protecting films are applied to surfaces of optical members (optical elements; optical materials) typically for preventing surface flaws and stains, improving cutting workability, and reducing cracking in production and working processes of the optical members, where the optical members are typified by polarizing plates, retardation films, and anti-reflective films (see Patent Literature (PTL) 1 and PTL 2). Such surface-protecting films generally employ removable pressure-sensitive adhesive sheets each including a plastic film substrate and, on a surface thereof, a removable pressure-sensitive adhesive layer.

Solvent-borne acrylic pressure-sensitive adhesives have been used as pressure-sensitive adhesives for the surface-protecting films (see PTL 1 and PTL 2). Attempts, however, have been made to switch the solvent-borne acrylic pressure-sensitive adhesives to water-dispersive acrylic pressure-sensitive adhesives (see PTL 3, PTL 4, and PTL 5), because the solvent-borne acrylic pressure-sensitive adhesives contain organic solvents and may thereby adversely affect working environmental conditions upon application (coating) of the adhesives.

The surface-protecting films should exhibit sufficient adhesiveness during affixation to optical members. In addition, they should exhibit excellent peelability (removability) because they will be peeled off (removed) after being used typically in production processes of optical members. For having excellent removability, surface-protecting films should have a small peel strength (light releasability) and, in addition, have such a property as not to increase in adhesive strength (peel strength) with time after the affixation to an adherend such as an optical member. This property is also referred to as "resistance to increase in adhesive strength."

The use of a water-insoluble crosslinking agent in a pressure-sensitive adhesive (or in a pressure-sensitive adhesive composition) is effective in obtaining the properties such as light releasability and resistance to increase in adhesive strength. Pressure-sensitive adhesive compositions using a water-insoluble crosslinking agent are exemplified by removable water-dispersible acrylic pressure-sensitive adhesive compositions containing an oil-soluble crosslinking agent (see PTL 6 and PTL 7).

However, the aforementioned pressure-sensitive adhesive compositions and other water-dispersible acrylic pressure-sensitive adhesive compositions using a water-insoluble crosslinking agent may include the water-insoluble crosslinking agent being insufficiently dispersed and remaining as large particles, and the large particles may often cause "dimples" and other appearance defects on the surface of a pressure-sensitive adhesive layer upon the formation thereof. Particularly when the water-insoluble crosslinking agent is used to form a pressure-sensitive adhesive layer of a surface-protecting film, the appearance defects may disadvantageously impede the inspection of the adherend with the surface-protecting film affixed thereto. A possible solution to avoid dimples caused by the water-insoluble crosslinking agent is the use of a leveling agent.

A water-dispersible acrylic pressure-sensitive adhesive composition, if containing the leveling agent, an emulsifier, or another surfactant, may generally have poor defoaming activity. Bubbles, if contained in a coating composition for the formation of a pressure-sensitive adhesive layer, may remain in the resulting pressure-sensitive adhesive layer formed by the application of the coating composition using a coating head. The residual bubbles disadvantageously form dimples on the surface of the pressure-sensitive adhesive layer to impair the appearance of the pressure-sensitive adhesive layer, may cause unevenness in thickness of the pressure-sensitive adhesive layer, and/or may remain as bubble defects even after drying of the pressure-sensitive adhesive layer. A defoaming agent is effectively used for better defoaming activity. However, the deforming agent, if added, may disadvantageously cause crawling; and, if the deforming agent is silica or another solid nucleating agent, the nucleating agent may unfortunately serve as a foreign substance to adversely affect the appearance of the coated layer.

Under these present circumstances, no removable water-dispersible acrylic pressure-sensitive adhesive has been obtained, which is capable of forming a pressure-sensitive adhesive layer having excellent adhesiveness and removability (particularly, superior resistance to increase in adhesive strength), less suffering from appearance defects such as "dimples," and having a good appearance.

In addition, pressure-sensitive adhesives and pressure-sensitive adhesive layers for use in surface-protecting

films (particularly, as or in surface-protecting films for optical members) are strongly desired to less stain to the adherend (e.g., an optical member). This is because staining (contamination) of the surface of the adherend may adversely affect optical properties of the optical member. The staining is due typically to remaining of the pressure-sensitive adhesive on the surface of the adherend (so-called "adhesive residue") and due to migration of components contained in the pressure-sensitive adhesive layer into the adherend surface upon removal of the pressure-sensitive adhesive sheet.

Citation List

Patent Literature

PTL 1: Japanese Unexamined Patent Application Publication (JP-A) No. H11-96
PTL 2: JP-A No. 2001-64607
PTL 3: JP-A No. 2001-131512
PTL 4: JP-A No. 2003-27026
PTL 5: Japanese Patent No. 3810490
PTL 6: JP-A No. 2004-91563
PTL 7: JP-A No. 2006-169496

Summary of Invention

Technical Problem

Accordingly, an object of the present invention is to provide a water-dispersible acrylic pressure-sensitive adhesive composition capable of forming a pressure-sensitive adhesive layer which has excellent resistance to increase in adhesive strength and a good appearance (less suffers from appearance defects such as dimples and bubble defects) and less causes staining. Another object of the present invention is to provide a pressure-sensitive adhesive sheet having a pressure-sensitive adhesive layer formed from the pressure-sensitive adhesive composition.

Solution to Problem

After intensive investigations to achieve the objects, the present inventors have found a water-dispersible acrylic pressure-sensitive adhesive composition containing an acrylic emulsion polymer formed from constitutive monomers in a specific formulation, and a polypropylene glycol (PPG)/polyethylene glycol (PEG) block copolymer having a specific structure, or a derivative of the block copolymer, as components. They have found that this water-dispersible acrylic pressure-sensitive adhesive composition is capable of forming a pressure-sensitive adhesive layer which has excellent resistance to increase in adhesive strength, has a good appearance, and less causes staining. The present invention has been made based on these findings.

Specifically, the present invention provides a water-dispersible acrylic pressure-sensitive adhesive composition containing an acrylic emulsion polymer (A) and a compound (B), in which the acrylic emulsion polymer (A) is formed from constitutive monomers essentially including a (meth)acrylic alkyl ester in a content of from 70 to 99.5 percent by weight and a carboxyl-containing unsaturated monomer in a content of from 0.5 to 10 percent by weight, each based on the total amount of the constitutive monomers, and the compound (B) is represented by following Formula (I):

$$R^1O\text{-}(PO)_a\text{-}(EO)_b\text{-}(PO)_c\text{-}R^2 \quad (I)$$

wherein each of $R^1$ and $R^2$ independently represents a linear or branched chain alkyl group or hydrogen atom; PO represents oxypropylene group; EO represents oxyethylene group; and each of "a," "b," and "c" is independently a positive integer, where EO and POs are added in a block manner.

The acrylic emulsion polymer (A) in the water-dispersible acrylic pressure-sensitive adhesive composition may be a polymer polymerized with a reactive emulsifier containing a radically polymerizable functional group in the molecule.

The water-dispersible acrylic pressure-sensitive adhesive composition may further contain a water-insoluble crosslinking agent (C) having, per molecule, two or more functional groups reactive with carboxyl group.

In the water-dispersible acrylic pressure-sensitive adhesive composition, the carboxyl-reactive functional groups of the water-insoluble crosslinking agent (C) may be present in an amount of from 0.3 to 1.3 moles per mole of carboxyl group of the carboxyl-containing unsaturated monomer.

The present invention further provides a pressure-sensitive adhesive sheet including a substrate and, on at

least one side thereof, a pressure-sensitive adhesive layer formed from the water-dispersible acrylic pressure-sensitive adhesive composition.

The pressure-sensitive adhesive sheet may be a surface-protecting film for an optical member.

Advantageous Effects of Invention

Pressure-sensitive adhesive compositions according to embodiments of the present invention are dispersible in water and have the aforementioned configuration. Pressure-sensitive adhesive layer formed from the pressure-sensitive adhesive compositions, and pressure-sensitive adhesive sheets having the pressure-sensitive adhesive layer therefore have excellent removability, superior adhesiveness, and good appearances and cause (leave) substantially no stain on the surface of an adherend after removal, and thus less cause staining. They are also resistant to increase in adhesive strength to the adherend with time. For these reasons, they are useful for protecting the surfaces of optical films.

Description of Embodiments

A water-dispersible acrylic pressure-sensitive adhesive composition according to an embodiment of the present invention (hereinafter also simply referred to as a "pressure-sensitive adhesive composition") contains an acrylic emulsion polymer (A) and a compound (B) as essential components. The pressure-sensitive adhesive composition preferably further contains a water-insoluble crosslinking agent (C).

[Acrylic Emulsion Polymer (A)]

The acrylic emulsion polymer (A) in the pressure-sensitive adhesive composition according to the present invention is a polymer formed from a (meth)acrylic alkyl ester and a carboxyl-containing unsaturated monomer as essential constitutive monomers (constitutive monomer components). Specifically, the acrylic emulsion polymer (A) is a polymer obtained from a monomer mixture including a (meth)acrylic alkyl ester and a carboxyl-containing unsaturated monomer as essential components. Each of acrylic emulsion polymers (A) may be used alone or in combination. As used herein the term "(meth)acrylic" refers to "acrylic" and/or "methacrylic."

The (meth)acrylic alkyl ester is used as a principal monomer component constituting the acrylic emulsion polymer (A) and mainly performs the function of developing adhesiveness, peelability, and other basic properties as a pressure-sensitive adhesive (or as a pressure-sensitive adhesive layer). Of (meth)acrylic alkyl esters, acrylic alkyl esters may effectively impart flexibility to the polymer constituting the pressure-sensitive adhesive layer and may help the pressure-sensitive adhesive layer to develop adhesion and tackiness; whereas methacrylic alkyl esters may impart hardness (rigidity) to the polymer constituting the pressure-sensitive adhesive layer and may help the pressure-sensitive adhesive layer to have controlled removability. Examples of the (meth)acrylic alkyl ester include, but are not limited to, (meth)acrylic alkyl esters whose alkyl moiety being a linear, branched chain, or cyclic alkyl group having 1 to 16 (more preferably 2 to 10, and furthermore preferably 4 to 8) carbon atoms.

Of acrylic alkyl esters, preferred are acrylic alkyl esters whose alkyl moiety having 2 to 14 (more preferably 4 to 8) carbon atoms, which are typified by acrylic alkyl esters whose alkyl moiety being a linear or branched chain alkyl group, such as n-butyl acrylate, isobutyl acrylate, s-butyl acrylate, isoamyl acrylate, hexyl acrylate, heptyl acrylate, octyl acrylate, 2-ethylhexyl acrylate, isooctyl acrylate, nonyl acrylate, and isononyl acrylate; and alicyclic acrylic alkyl esters such as isobornyl acrylate. Among them, 2-ethylhexyl acrylate, n-butyl acrylate, and isobornyl acrylate are more preferred.

Of methacrylic alkyl esters, preferred are methacrylic alkyl esters whose alkyl moiety having 1 to 16 (more preferably 1 to 8) carbon atoms, which are typified by methacrylic alkyl esters whose alkyl moiety being a linear or branched chain alkyl group, such as methyl methacrylate, ethyl methacrylate, propyl methacrylate, isopropyl methacrylate, n-butyl methacrylate, isobutyl methacrylate, s-butyl methacrylate, and t-butyl methacrylate; and alicyclic methacrylic alkyl esters such as cyclohexyl methacrylate, bornyl methacrylate, and isobornyl methacrylate. Among them, methyl methacrylate and n-butyl methacrylate are particularly preferred.

The (meth)acrylic alkyl ester can be suitably chosen according typically to the intended tackiness, and each of different (meth)acrylic alkyl esters may be used alone or in combination.

The (meth)acrylic alkyl ester(s) is contained in a content of from 70 to 99.5 percent by weight, and more preferably from 85 to 99 percent by weight, based on the total amount (100 percent by weight) of constitutive monomers (total constitutive monomers) constituting the acrylic emulsion polymer (A). The (meth)acrylic alkyl ester(s), if present in a content of more than 99.5 percent by weight, causes an excessively small relative content of the carboxyl-containing unsaturated monomer(s), and this may cause a pressure-sensitive adhesive layer formed from the pressure-sensitive adhesive composition to have insufficient anchoring capability, to cause stains, and to have insufficient emulsion stability. The (meth)acrylic alkyl ester(s), if present in a content of less than 70 percent by weight, may cause the pressure-sensitive adhesive layer to have insufficient adhesiveness and removability. When two or more different (meth)acrylic alkyl esters are used, the total amount (total content) of all the (meth)acrylic alkyl esters may fall within the above-specified range. Though not critical, the ratio of the content of acrylic alkyl ester(s) to the content of methacrylic alkyl ester(s) in the (meth)acrylic alkyl esters [(content of acrylic alkyl ester(s)):(content of methacrylic alkyl ester(s))] is preferably from 100:0 to 30:70 (by weight), and more preferably from 100:0 to 50:50.

The carboxyl-containing unsaturated monomer can exhibit the function of forming a protective layer on the surface of emulsion particles including the acrylic emulsion polymer (A) to prevent the shear fracture of the emulsion particles. This function is further improved by neutralizing the carboxyl group with a base. The stability of the particles against shear fracture is more generally referred to as mechanical stability. The carboxyl-containing unsaturated monomer may be used in combination with one or more multifunctional compounds (e.g., multifunctional epoxy compounds) being reactive with carboxyl group. This may allow the carboxyl-containing unsaturated monomer to act as crosslinking points during the formation of the pressure-sensitive adhesive layer through removal of water. In addition, the carboxyl-containing unsaturated monomer may increase the adhesion (anchoring capability) of the pressure-sensitive adhesive layer to the substrate through the multifunctional compounds. Exemplary carboxyl-containing unsaturated monomers include (meth)acrylic acid (acrylic acid and methacrylic acid), itaconic acid, maleic acid, fumaric acid, crotonic acid, carboxyethyl acrylate, and carboxypentyl acrylate. As used herein the term "carboxyl-containing unsaturated monomer(s)" also includes unsaturated monomers containing an acid anhydride group, such as maleic anhydride and itaconic anhydride. Among them, acrylic acid is preferred because of easily having a high relative concentration in the surface of the particles to form a denser protective layer. Each of different carboxyl-containing unsaturated monomers may be used alone or in combination.

The carboxyl-containing unsaturated monomer(s) is contained in a content of from 0.5 to 10 percent by weight, preferably from 1 to 5 percent by weight, and more preferably from 2 to 4 percent by weight, based on the total amount (100 percent by weight) of constitutive monomers (total constitutive monomers) constituting the acrylic emulsion polymer (A). The carboxyl-containing unsaturated monomer(s), if present in a content of more than 10 percent by weight, may undergo polymerization in water to cause thickening (increase in viscosity), because such carboxyl-containing unsaturated monomers (e.g., acrylic acid) are generally soluble in water. In addition, such an excessively large amount of the carboxyl-containing unsaturated monomer(s) may cause the pressure-sensitive adhesive layer to have, after its formation, an increasing interaction with a functional group on the surface of the adherend (e.g., polarizing plate) to thereby have an increasing adhesive strength with time, and this may impede the removal of the pressure-sensitive adhesive layer from the adherend. The carboxyl-containing unsaturated monomer(s), if present in a content of less than 0.5 percent by weight, may cause the emulsion particles to have insufficient mechanical stability and may cause insufficient adhesion (anchoring capability) between the pressure-sensitive adhesive layer and the substrate, thus causing adhesive residue.

Monomer components (constitutive monomers) constituting the acrylic emulsion polymer (A) may further include one or more additional monomer components for imparting a specific function, in addition to the (meth)acrylic alkyl ester (s) and the carboxyl-containing unsaturated monomer(s). Exemplary additional monomer components are as follows. For higher cohesive force, the monomer components may contain (employ) any of amido-containing monomers such as (meth)acrylamide, N,N-diethyl(meth)acrylamide, and N-isopropyl(meth)acrylamide; and amino-containing monomers such as N,N-dimethylaminoethyl (meth)acrylate and N,N-dimethylaminopropyl (meth)acrylate as additional monomer components, in an amount per each category of from about 0.1 to about 10 percent by weight. For the control of refractive index and/or for satisfactory reworkability, the monomer components may contain (employ) any of (meth)acrylic aryl esters such as phenyl (meth)acrylate; vinyl esters such as vinyl acetate and vinyl propionate; and styrenic monomers such as styrene, in an amount per each category of 15 percent by weight or less. For improving crosslinking in the emulsion particles and for higher cohesive force, the monomer components may contain (employ) any of epoxy-containing monomers such as glycidyl (meth)acrylate and allyl glycidyl ether; and multifunctional monomers such as trimethylolpropane tri(meth)acrylate and divinylbenzene, in an amount per each category of less than 5 percent by weight. For forming hydrazide crosslinks with the combination use of a hydrazide crosslinking agent to further less cause staining, the monomer components may contain (employ) any of keto-containing unsaturated monomers such as diacetoneacrylamide (DAAM), allyl acetoacetate, and 2-(acetoacetoxy)ethyl (meth) acrylate, in an amount of less than 10 percent by weight, and preferably from 0.5 to 5 percent by weight.

A hydroxyl-containing unsaturated monomer may be used as the additional monomer component. The hydroxyl-containing unsaturated monomer is typified by 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth) acrylate, 12-hydroxylauryl (meth)acrylate, (4-hydroxymethylcyclohexyl)methyl acrylate, N-methylol(meth)acrylamide, vinyl alcohol, allyl alcohol, 2-hydroxyethyl vinyl ether, 4-hydroxybutyl vinyl ether, and diethylene glycol monovinyl ether. The amount of the hydroxyl-containing unsaturated monomer to be added (used) is preferably minimized for reducing whitening as stains. Specifically, the amount of the hydroxyl-containing unsaturated monomer is preferably less than 1 percent by weight, more preferably less than 0.1 percent by weight, and furthermore preferably substantially zero (substantially no hydroxyl-containing unsaturated monomer is contained) (e.g., the content is less than 0.05 percent by

weight). However, such a hydroxyl-containing unsaturated monomer may be added (used) in an amount of from about 0.01 to about 10 percent by weight, for the purpose of introducing crosslinking points in crosslinking between hydroxyl group and isocyanate group or in metal crosslinking.

The amounts of the additional monomer components to be added (used) are indicated as contents based on the total amount (100 percent by weight) of constitutive monomers (total constitutive monomers) constituting the acrylic emulsion polymer (A).

The monomer components (constitutive monomers) constituting the acrylic emulsion polymer (A) preferably contain (employ) at least one monomer selected from the group consisting of methyl methacrylate, isobornyl acrylate, and vinyl acetate, of which methyl methacrylate is more preferred, particularly for a better appearance of the pressure-sensitive adhesive sheet (pressure-sensitive adhesive layer) formed from the pressure-sensitive adhesive composition according to the present invention. The monomer(s) (monomer(s) selected from the group consisting of methyl methacrylate, isobornyl acrylate, and vinyl acetate) may be contained in a content of preferably from 1 to 15 percent by weight, more preferably from 2 to 10 percent by weight, and furthermore preferably from 2 to 5 percent by weight, based on the total amount (100 percent by weight) of constitutive monomers (total constitutive monomers) constituting the acrylic emulsion polymer (A). The monomer(s), if present in a content of less than 1 percent by weight, may not effectively contribute to the better appearance; and the monomer(s), if present in a content of more than 15 percent by weight, may cause the pressure-sensitive adhesive layer to be excessively rigid and to have insufficient adhesion. When two or more monomers selected from the group consisting of methyl methacrylate, isobornyl acrylate, and vinyl acetate are contained in the constitutive monomers constituting the acrylic emulsion polymer (A), the total amount (total content) of methyl methacrylate, isobornyl acrylate, and vinyl acetate may fall within the above-specified range.

The acrylic emulsion polymer (A) for use in the present invention may be obtained by emulsion polymerization of the constitutive monomers (monomer mixture) with an emulsifier and a polymerization initiator.

The emulsifier for use in the emulsion polymerization to form the acrylic emulsion polymer (A) is preferably a reactive emulsifier containing a radically polymerizable functional group introduced into the molecule (reactive emulsifier containing a radically polymerizable functional group). Each of such emulsifiers may be used alone or in combination.

The reactive emulsifier containing a radically polymerizable functional group (hereinafter also referred to as "reactive emulsifier") is an emulsifier containing at least one radically polymerizable functional group in the molecule (per molecule). The reactive emulsifier is typified by, but is not limited to, reactive emulsifiers having one or more radically polymerizable functional groups such as vinyl groups, propenyl groups, isopropenyl groups, vinyl ether groups (vinyloxy groups), and allyl ether groups (allyloxy groups). Each of different reactive emulsifiers may be used alone or in combination. The reactive emulsifier, when used, is taken into the polymer, and this may advantageously reduce stains derived from the emulsifier.

Examples of the reactive emulsifiers include reactive emulsifiers each having a structure (or corresponding to the structure) of a nonionic-anionic emulsifier (anionic emulsifier having a nonionic hydrophilic group), except with an introduced radically polymerizable functional group (radically reactive group) such as propenyl group or allyl ether group. Exemplary nonionic-anionic emulsifiers include sodium polyoxyethylene alkyl ether sulfates, ammonium polyoxyethylene alkyl phenyl ether sulfates, sodium polyoxyethylene alkyl phenyl ether sulfates, and sodium polyoxyethylene alkyl sulfosuccinates. Hereinafter a reactive emulsifier having a structure corresponding to an anionic emulsifier, except with a radically polymerizable functional group being introduced, is referred to as an "anionic reactive emulsifier"; and a reactive emulsifier having a structure corresponding to a nonionic-anionic emulsifier, except with a radically polymerizable functional group being introduced, is referred to as a "nonionic-anionic reactive emulsifier."

Among them, anionic reactive emulsifiers are preferred, of which nonionic-anionic reactive emulsifiers are more preferred, because these emulsifiers will be taken into the polymer to less cause staining. Such an anionic reactive emulsifier, as having a catalytic activity, can also help the crosslinking agent to exhibit better reactivity particularly when the water-insoluble crosslinking agent (C) is a multifunctional epoxy crosslinking agent having an epoxy group. If no anionic reactive emulsifier is used, the crosslinking reaction may not complete even through aging, and the resulting pressure-sensitive adhesive layer may disadvantageously have an adhesive strength varying with time and may contain unreacted carboxyl groups to have an increasing adhesive strength with time to the adherend. The anionic reactive emulsifiers are also preferred because they are taken into the polymer, thereby do not precipitate to the surface of the adherend, and cannot cause whitening as stains, unlike quaternary ammonium compounds (e.g., see JP-A No. 2007-31585) which are generally used as catalysts for epoxy crosslinking agents and which precipitate to the surface of the adherend.

The reactive emulsifiers may also be available as commercial products which are exemplified by products available under the trade name "ADEKA REASOAP SE-10N" (from ADEKA CORPORATION), the trade name "AQUALON HS-10" (from Dai-ichi Kogyo Seiyaku Co., Ltd.), and the trade name "AQUALON HS-05" (from Dai-ichi Kogyo Seiyaku Co., Ltd.).

The emulsifier for use herein is preferably one having a $SO_4^{2-}$ ion concentration of 100 $\mu$g/g or less, from which impurity ions have been removed, because such impurity ions may adversely affect the composition. Of the anionic

emulsifiers, ammonium salt emulsifiers are desirably used. The removal of impurities from the emulsifier may be performed by a suitable process such as a process of removing impurities using an ion-exchange resin, a process of separating impurities using a membrane, or a process of precipitating impurities from an alcohol and removing the precipitates by filtration.

The reactive emulsifier may be incorporated (used) in an amount of preferably from 0.1 to 5 parts by weight, and more preferably from 0.5 to 3 parts by weight, per 100 parts by weight of the total amount of constitutive monomers (total constitutive monomers) constituting the acrylic emulsion polymer (A). The reactive emulsifier, if used in an amount of more than 5 parts by weight, may cause the pressure-sensitive adhesive (pressure-sensitive adhesive layer) to have an insufficient cohesive force, resulting in increased staining on the adherend or resulting in migration and staining of the emulsifier to the adherend. The reactive emulsifier, if used in an amount of less than 0.1 part by weight, may fail to maintain stable emulsification.

The polymerization initiator for use in the emulsion polymerization to form the acrylic emulsion polymer (A) is exemplified by, but is not limited to, azo polymerization initiators such as 2,2'-azobisisobutyronitrile, 2,2'-azobis (2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutyramidine); persulfate polymerization initiators such as potassium peroxodisulfate and ammonium persulfate; peroxide polymerization initiators such as benzoyl peroxide, t-butyl hydroperoxide, and hydrogen peroxide; and redox polymerization initiators each including a peroxide and a reducing agent in combination, such as redox polymerization initiators using a peroxide and ascorbic acid in combination (e.g., one using a hydrogen peroxide solution and ascorbic acid in combination), those using a peroxide and an iron(II) salt in combination (e.g., one using a hydrogen peroxide solution and an iron(II) salt), and those using a persulfate and sodium hydrogen sulfite in combination. Each of different polymerization initiators may be used alone or in combination.

The amount of the polymerization initiator(s) to be added (used) is not critical and may be determined as appropriate according typically to the types of the polymerization initiator and the constitutive monomers, but is preferably from 0.01 to 1 part by weight, and more preferably from 0.02 to 0.5 part by weight, per 100 parts by weight of the total amount of constitutive monomers (total constitutive monomers) constituting the acrylic emulsion polymer (A).

Emulsion polymerization to form the acrylic emulsion polymer (A) is not limited in procedure and may be performed by an arbitrary common procedure such as batch polymerization, continuous dropping polymerization, or portion-wise dropping polymerization. The polymerization is preferably performed according to batch polymerization at a low temperature (e.g., 55°C or lower, preferably 30°C or lower) for less causing staining. Polymerization, when performed under these conditions, may often give a polymer which includes high-molecular-weight components in large amounts but low-molecular-weight components in small amounts, and this may probably reduce staining.

The acrylic emulsion polymer (A) is a polymer essentially including constitutional units derived from the (meth)acrylic alkyl ester; and constitutional units derived from the carboxyl-containing unsaturated monomer. The acrylic emulsion polymer (A) contains constitutional units derived from the (meth)acrylic alkyl ester in a content of preferably from 70 to 99.5 percent by weight and more preferably from 85 to 99 percent by weight, and contains constitutional units derived from the carboxyl-containing unsaturated monomer in a content of preferably from 0.5 to 10 percent by weight, more preferably from 1 to 5 percent by weight, and furthermore preferably from 2 to 4 percent by weight.

The acrylic emulsion polymer (A) may have a solvent-insoluble content (percentage of solvent-insoluble matter, hereinafter also referred to as "gel fraction") of preferably 70% (percent by weight) or more, more preferably 75 percent by weight or more, and still more preferably 80 percent by weight or more. The acrylic emulsion polymer (A), if having a solvent-insoluble content of less than 70 percent by weight, may contain large amounts of low-molecular-weight components. Such large amounts of low-molecular-weight components may not be reduced by the action of crosslinking alone and may remain in the pressure-sensitive adhesive layer to cause stains on the adherend or to cause the pressure-sensitive adhesive layer to have an excessively high adhesive strength. The solvent-insoluble content can be controlled by choosing or setting the polymerization initiator, the reaction temperature, and the types of the emulsifier and the constitutive monomers. Though not critical, the upper limit of the solvent-insoluble content may be 99 percent by weight.

As used herein the term "solvent-insoluble content" of the acrylic emulsion polymer (A) refers to a value as determined by calculation according to the following "method for measuring solvent-insoluble content."

(Method for Measuring Solvent-insoluble Content)

About 0.1 g of the acrylic emulsion polymer (A) is sampled to give a specimen, the specimen is covered by a porous tetrafluoroethylene sheet (trade name "NTF1122" supplied by Nitto Denko Corporation) having an average pore size of 0.2 $\mu$m, tied with a kite string, and the weight of the resulting article is measured and defined as a "weight before immersion." The weight before immersion is the total weight of the acrylic emulsion polymer (A) (the sampled specimen), the tetrafluoroethylene sheet, and the kite string. Independently, the total weight of the tetrafluoroethylene sheet and the kite string is measured and defined as a "tare weight."

Next, the specimen acrylic emulsion polymer (A) covered by the tetrafluoroethylene sheet and tied with the kite string

(this article is hereinafter referred to as "sample") is placed in a 50-ml vessel filled with ethyl acetate, and left stand therein at 23°C for 7 days. The sample (after treatment with ethyl acetate) is recovered from the vessel, transferred to an aluminum cup, dried in a drier at 130°C for 2 hours to remove ethyl acetate, and the weight of the resulting sample is measured and defined as a "weight after immersion."
The solvent-insoluble content is calculated according to the following equation:

$$\text{Solvent-insoluble content (percent by weight)} = (a-b)/(c-b) \times 100 \quad (1)$$

wherein "a" represents the weight after immersion; "b" represents the tare weight; and "c" represents the weight before immersion.
Though not critical, the pressure-sensitive adhesive composition according to the present invention contains the acrylic emulsion polymer (A) in a content of preferably 80 percent by weight or more, and more preferably from 90 to 99 percent by weight, based on the total weight (100 percent by weight) of non-volatile components (solids) in the pressure-sensitive adhesive composition,.

[Compound (B)]

The compound (B) in the pressure-sensitive adhesive composition according to the present invention is a compound represented by following Formula (I):

$$R^1O\text{-}(PO)_a\text{-}(EO)_b\text{-}(PO)_c\text{-}R^2 \quad (I)$$

In Formula (I), $R^1$ and $R^2$ each represent a linear or branched chain alkyl group or hydrogen atom. $R^1$ and $R^2$ may be the same as or different from each other. Though not limited, preferable examples of the linear or branched chain alkyl group include alkyl groups having 1 to 4 carbon atoms, such as methyl group, ethyl group, propyl group, and butyl group. Above all, $R^1$ and $R^2$ are preferably both hydrogen atoms.
PO in Formula (I) represents oxypropylene group [$-CH_2CH(CH_3)O-$] ; and each of "a" and "c" is independently a positive integer (an integer of 1 or more) and is preferably from 1 to 100, more preferably from 10 to 50, and furthermore preferably from 10 to 30. The repetition numbers "a" and "c" may be the same as or different from each other.
EO in Formula (I) represents oxyethylene group [$-CH_2CH_2O-$]; and "b" represents a positive integer (an integer of 1 or more) and is preferably from 1 to 50, and more preferably from 1 to 30.
EO and POs in Formula (I) are added (copolymerized) in a block manner. Specifically, the compound (B) is a triblock copolymer or a derivative of the triblock copolymer, which triblock copolymer has a EO block [polyoxyethylene block or polyethylene glycol (PEG) block] and, on both sides of the EO block, blocks composed of PO [polyoxypropylene blocks or polypropylene glycol (PPG) blocks].
The compound (B), as contained in the pressure-sensitive adhesive composition, may exhibit deforming properties to reduce or remove defects derived from bubbles. The compound (B) may bleed out at the interface between the pressure-sensitive adhesive layer and the adherend to help the pressure-sensitive adhesive layer to have controlled releasability. This allows designing of the pressure-sensitive adhesive layer to have light releasability. Specifically, the use of the compound (B) in a larger amount allows the pressure-sensitive adhesive layer to have lighter releasability with less causing staining.
The compound (B) has a block type structure including the polyoxyethylene block in a center part of the molecule, and blocks composed of POs serving as hydrophobic groups at both ends of the molecule. The compound (B) is therefore resistant to uniform alignment and can exhibit defoaming activity. In contrast to the PPG-PEG-PPG triblock copolymer, a PEG-PPG-PEG triblock copolymer having polyoxyethylene blocks at both ends of the molecule, and a diblock copolymer of polyoxyethylene and polyoxypropylene are liable to align at the vapor-liquid interface and have the function of stabilizing foams (bubbles).
The compound (B) is highly hydrophobic, less causes whitening occurring on the adherend in a high-humidity environment, and further less causes staining. By contrast, a highly hydrophilic compound (particularly, a water-soluble compound) may be easily dissolved in water to migrate into the adherend, or, when bled out on the adherend, may swell to be whitened, and may readily stain the adherend to cause whitening.
The compound (B) also helps the pressure-sensitive adhesive layer formed from the pressure-sensitive adhesive composition according to the present invention to be resistant to whitening of itself even when stored at high humidity (whitening due to moisture absorption). When a pressure-sensitive adhesive sheet is used as a surface-protecting film for an optical member, whitening of a pressure-sensitive adhesive layer (specifically, whitening of the pressure-sensitive

adhesive sheet), if occurring, may cause troubles in the inspection process of the optical member.

The compound (B) has a percentage of the "total weight of EOs" based on the "total weight of the compound(s) (B)" [(total weight of EOs)/(total weight of the compound(s) (B)) x 100] (in unit of percent by weight (%)) of preferably 50 percent by weight or less, more preferably from 5 to 50 percent by weight, and furthermore preferably from 10 to 30 percent by weight. The compound (B), if having the percentage (EO content) of more than 50 percent by weight, may have high hydrophilicity to lose defoaming activity. The compound (B), if having the percentage of less than 5 percent by weight, may have excessively high hydrophobicity to cause crawling. As used herein the term "total weight of the compound(s) (B)" refers to the "total sum of weights of all compounds (B) in the pressure-sensitive adhesive composition according to the present invention"; and the term "total weight of EOs" refers to the "total sum of weights of EOs contained in all the compounds (B) in the pressure-sensitive adhesive composition according to the present invention." The percentage of the "total weight of EOs" based on the "total weight of the compound(s) (B)" is also referred to as an "EO content." The EO content may be measured, for example, by nuclear magnetic resonance (NMR) analysis, chromatography, or time-of-flight secondary ion mass spectrometry (TOF-SIMS).

The compound (B) in the pressure-sensitive adhesive composition according to the present invention preferably has a number-average molecular weight of from 1500 to 4000. The compound (B), if having a number-average molecular weight of less than 1500, may have excessively high compatibility (miscibility) with the system (the system of the pressure-sensitive adhesive composition) and may not exhibit effective defoaming activity. The compound (B), if having a number-average molecular weight of more than 4000, may be excessively immiscible with the system to cause crawling upon the application of the pressure-sensitive adhesive composition typically to the substrate, although the compound (B) may exhibit higher defoaming activity.

The compound (B) may also be any of commercial products which are typified by those available under the trade names "ADEKA PLURONIC 25R-1," "ADEKA PLURONIC 25R-2," "ADEKA PLURONIC 17R-2," and "ADEKA PLURONIC 17R-3," each from ADEKA CORPORATION; and "PLURONIC RPE Series" from BASF Japan Ltd.

Each of different compounds (B) may be used alone or in combination.

The compound (B) is preferably incorporated alone without using solvents upon the preparation of the pressure-sensitive adhesive composition according to the present invention. However, the compound (B) may be used as a dispersion or solution in a solvent (medium) typically for higher workability in blending. The solvent is exemplified by 2-ethylhexanol, butyl cellosolve, dipropylene glycol, ethylene glycol, propylene glycol, n-propanol, and isopropyl alcohol. Among these solvents, ethylene glycol is preferably employed for satisfactory dispersibility in the emulsion system.

The compound(s) (B) is blended in an amount (content in the pressure-sensitive adhesive composition according to the present invention) of preferably from 0.01 to 1 part by weight, and more preferably from 0.02 to 0.8 part by weight, per 100 parts by weight of the acrylic emulsion polymer (A). The compound(s) (B), if present in an amount of less than 0.01 part by weight, may not impart sufficient defoaming activity to the composition; whereas the compound(s) (B), if incorporated in an amount of more than 1 part by weight, may liable to cause staining.

[Water-insoluble Crosslinking Agent (C)]

Though not limited, crosslinking agents for use in the pressure-sensitive adhesive composition according to the present invention are preferably water-insoluble crosslinking agents, because such water-insoluble crosslinking agents less cause staining and can suppress increase in adhesive strength. Among them, a water-insoluble crosslinking agent (C) having two or more functional groups reactive with carboxyl group (carboxyl-reactive functional groups) in the molecule (per one molecule) is preferred. The "water-insoluble crosslinking agent (C) having two or more carboxyl-reactive functional groups per molecule" herein is also simply referred to as a "water-insoluble crosslinking agent (C)." Specifically, the pressure-sensitive adhesive composition according to the present invention preferably contains a water-insoluble crosslinking agent (C).

The water-insoluble crosslinking agent (C) is a water-insoluble compound which has two or more (e.g., two to six) carboxyl-reactive functional groups in the molecule (per molecule). The water-insoluble crosslinking agent (C) preferably has three to five carboxyl-reactive functional groups per molecule. With an increasing number of carboxyl-reactive functional groups per molecule, the pressure-sensitive adhesive composition undergoes denser crosslinking. Specifically, the polymer constituting the pressure-sensitive adhesive layer has a denser crosslinking structure. This enables prevention of the spread of the pressure-sensitive adhesive layer caused by wetting after its formation. Such dense crosslinking structure may constrain the polymer constituting the pressure-sensitive adhesive layer and may avoid the segregation of the functional groups (carboxyl groups) in the pressure-sensitive adhesive layer to the surface in contact with the adherend, thus preventing increase in adhesive strength between the pressure-sensitive adhesive layer and the adherend with time. The water-insoluble crosslinking agent (C), if having carboxyl-reactive functional groups in an excessively large number of more than six, may cause the formation of a gelled substance.

Exemplary carboxyl-reactive functional groups in the water-insoluble crosslinking agent (C) include, but are not limited to, epoxy groups, isocyanate groups, and carbodiimide groups. Among them, epoxy groups are preferred for

satisfactory reactivity, of which glycidylamino group is more preferred. This is because the glycidylamino group is highly reactive, thereby prevents an unreacted substance from remaining after the crosslinking reaction, and advantageously helps the pressure-sensitive adhesive sheet to less cause staining. The highly-reactive glycidylamino group also reduces the amount of unreacted carboxyl groups in the pressure-sensitive adhesive layer and thereby prevents increase in adhesive strength to the adherend with time, which increase is caused by unreacted carboxyl groups. Specifically, the water-insoluble crosslinking agent (C) is preferably any of epoxy crosslinking agents having epoxy groups, and more preferably any of crosslinking agents having glycidylamino groups (glycidylamino crosslinking agents). The water-insoluble crosslinking agent (C), when being an epoxy crosslinking agent (particularly, a glycidylamino crosslinking agent), has epoxy groups (particularly, glycidylamino groups) in a number of two more (e.g., two to six), and preferably in a number of three to five per molecule.

The water-insoluble crosslinking agent (C) is a water-insoluble compound. As used herein the term "water-insoluble" refers to that the compound (crosslinking agent) has a solubility of 5 parts by weight or less per 100 parts by weight of water at 25°C. The solubility is the weight of the compound (crosslinking agent) soluble in 100 parts by weight of water. The solubility is preferably 3 parts by weight or less, and more preferably 2 parts by weight or less. Such a water-insoluble crosslinking agent, when used, hardly causes whitening as stains on the adherend and helps the pressure-sensitive adhesive layer to further less cause staining. The whitening as stains on the adherend may occur in a high-humidity environment by the action of a crosslinking agent which has not undergone crosslinking and remains in the resulting polymer. Specifically, a water-soluble crosslinking agent, if remains and is present in a high-humidity environment, may be readily dissolved in water and migrate into the adhered to often cause whitening as stains on the adherend. As compared to such a water-soluble crosslinking agent, the water-insoluble crosslinking agent more contributes to the crosslinking reaction (reaction with carboxyl group) and more effectively suppresses increase in adhesive strength with time. The water-insoluble crosslinking agent also exhibits high reactivity in a crosslinking reaction, thereby allows the crosslinking reaction to proceed rapidly during aging, and suppresses increase in adhesive strength to the adherend with time, which increase is caused by unreacted carboxyl groups in the pressure-sensitive adhesive layer.

The solubility of a crosslinking agent in water may be measured typically in the following manner.

(Method for Measuring Solubility in Water)

Water (25°C) and the crosslinking agent in equal amounts are mixed with a stirrer at 300 revolutions per minute (rpm) for 10 minutes, and the mixture is separated into an aqueous phase and an oily phase by centrifugal separation. Next, the aqueous phase is recovered, dried at 120°C for one hour, a weight loss on drying is determined, from which a non-volatile content in the aqueous phases is determined. The non-volatile content is the weight (part by weight) of non-volatile components in the aqueous phase per 100 parts by weight of water.

Specific examples of the water-insoluble crosslinking agent (C) include glycidylamino crosslinking agents such as 1,3-bis(N,N-diglycidylaminomethyl)cyclohexane (e.g., trade name "TETRAD-C" supplied by Mitsubishi Gas Chemical Company, Inc.) [having a solubility of 2 parts by weight or less per 100 parts by weight of water at 25°C], 1,3-bis(N,N-diglycidylaminomethyl)benzene (e.g., trade name "TETRAD-X" supplied by Mitsubishi Gas Chemical Company, Inc.) [having a solubility of 2 parts by weight or less per 100 parts by weight of water at 25°C]; and other epoxy crosslinking agents such as tris (2,3-epoxypropyl) isocyanurate (e.g., trade name "TEPIC-G" supplied by Nissan Chemical Industries, Ltd.) [having a solubility of 2 parts by weight or less per 100 parts by weight of water at 25°C]. Each of the water-insoluble crosslinking agents (C) may be used alone or in combination.

The water-insoluble crosslinking agent (C) may be added (incorporated) as intact as a liquid or may be added after dissolving and/or diluting with an organic solvent in the preparation of the pressure-sensitive adhesive composition according to the present invention. In the latter case, however, the organic solvent is preferably used in a minimum amount. Addition of the water-insoluble crosslinking agent (C) after being emulsified with an emulsifier is not preferred, because the emulsifier is liable to bleed out to cause staining (particularly whitening as stains).

The water-insoluble crosslinking agent(s) (C) is preferably incorporated in such an amount (content in the pressure-sensitive adhesive composition according to the present invention) that the carboxyl-reactive functional groups of the water-insoluble crosslinking agent(s) (C) are present in an amount of from 0.3 to 1.3 moles per mole of carboxyl group of the carboxyl-containing unsaturated monomer(s) used as a constitutive monomer for the acrylic emulsion polymer (A). Specifically, the pressure-sensitive adhesive composition has a ratio (molar ratio) [(carboxyl-reactive functional groups)/(carboxyl groups)] of preferably from 0.3 to 1.3, more preferably from 0.4 to 1.1, and furthermore preferably from 0.5 to 1.0. The ratio is the ratio of the "total number of moles of carboxyl-reactive functional groups in total water-insoluble crosslinking agents (C)" to the "total number of moles of carboxyl groups in all carboxyl-containing unsaturated monomers used as constitutive monomers for the acrylic emulsion polymer (A)." If the ratio [(carboxyl-reactive functional groups)/(carboxyl groups)] is less than 0.3, a large amount of unreacted carboxyl groups may remain in the pressure-sensitive adhesive layer and may interact with the adherend to increase the adhesive strength with time. If the ratio [(carboxyl-reactive functional groups)/(carboxyl groups)] is more than 1.3, a large amount of unreacted water-insoluble

crosslinking agent (C) may remain in the pressure-sensitive adhesive layer to cause appearance defects.

When the water-insoluble crosslinking agent (C) is an epoxy crosslinking agent, the ratio (by mole) of [(epoxy groups)/(carboxyl groups)] is preferably from 0.3 to 1.3, more preferably from 0.4 to 1.1, and furthermore preferably from 0.5 to 1.0. When the water-insoluble crosslinking agent (C) is a glycidylamino crosslinking agent, the ratio (by mole) of [glycidylamino group/carboxyl group] preferably falls within the above-specified range.

The number of moles of carboxyl-reactive functional groups of the water-insoluble crosslinking agent (C) may be calculated according to the following equation, assuming that 4 grams of a water-insoluble crosslinking agent (C) having a functional-group equivalent of carboxyl-reactive functional groups of 110 (g/eq) is added (incorporated) to the pressure-sensitive adhesive composition:

Number of moles of carboxyl-reactive functional groups of water-insoluble crosslinking agent (C) = [Amount of water-insoluble crosslinking agent (C) to be added (incorporated)]/[Functional-group equivalent] = 4/110

Typically, the number of moles of epoxy groups of an epoxy crosslinking agent may be calculated according to the following equation, assuming that 4 grams of an epoxy crosslinking agent having an epoxy equivalent of 110 (g/eq) is added (incorporated) as the water-insoluble crosslinking agent (C):

Number of moles of epoxy groups of epoxy crosslinking agent = [Amount of epoxy crosslinking agent to be added (incorporated)]/[Epoxy equivalent] = 4/110

[Water-dispersible Acrylic Pressure-Sensitive Adhesive

Composition and Pressure-Sensitive Adhesive Sheet]

The pressure-sensitive adhesive composition according to the present invention is a water-dispersible pressure-sensitive adhesive composition. As used herein the term "water-dispersible" refers to that the substance in question is dispersible in an aqueous medium. Specifically, the pressure-sensitive adhesive composition according to the present invention is a pressure-sensitive adhesive composition dispersible in an aqueous medium. The aqueous medium is a medium (dispersion medium) containing water as an essential component and may be water alone or a mixture of water and a water-soluble organic solvent (water-miscible organic solvent). The pressure-sensitive adhesive composition according to the present invention may also be a fluid dispersion using the aqueous medium.

The pressure-sensitive adhesive composition according to the present invention may further contain a multifunctional hydrazide crosslinking agent as a crosslinking agent (other crosslinking agent) other than the water-insoluble crosslinking agent (C). A multifunctional hydrazide crosslinking agent, when used, may help the pressure-sensitive adhesive layer formed from the pressure-sensitive adhesive composition to have more satisfactory removability, adhesiveness, and anchoring capability to the substrate. The multifunctional hydrazide crosslinking agent (hereinafter also simply referred to as "hydrazide crosslinking agent") is a compound having at least two hydrazide groups in the molecule (per molecule). The hydrazide crosslinking agent preferably has two or three hydrazide groups and more preferably has two hydrazide groups per molecule. Exemplary compounds preferably used as the hydrazide crosslinking agent include dihydrazide compounds such as oxalic acid dihydrazide, malonic acid dihydrazide, succinic acid dihydrazide, glutaric acid dihydrazide, adipic acid dihydrazide, pimelic acid dihydrazide, suberic acid dihydrazide, azelaic acid dihydrazide, sebacic acid dihydrazide, dodecanedioic acid dihydrazide, phthalic acid dihydrazide, isophthalic acid dihydrazide, terephthalic acid dihydrazide, 2,6-naphthalenedicarboxylic acid dihydrazide, naphthalic acid dihydrazide, acetonedicarboxylic acid dihydrazide, fumaric acid dihydrazide, maleic acid dihydrazide, itaconic acid dihydrazide, trimellitic acid dihydrazide, 1,3,5-benzenetricarboxylic acid dihydrazide, pyromellitic acid dihydrazide, and aconitic acid dihydrazide. Among them, adipic acid dihydrazide and sebacic acid dihydrazide are particularly preferred. Each of different hydrazide crosslinking agents may be used alone or in combination.

The hydrazide crosslinking agent may also be any of commercial products such as products available under the trade names "Adipic Acid Dihydrazide (reagent)" from Tokyo Chemical Industry Co., Ltd., and "Adipoyl Dihydrazide (reagent)" from Wako Pure Chemical Industries, Ltd.

The hydrazide crosslinking agent(s) is incorporated in an amount (content in the pressure-sensitive adhesive composition according to the present invention) of preferably from 0.025 to 2.5 moles, more preferably from 0.1 to 2 moles, and furthermore preferably from 0.2 to 1.5 moles, per mole of keto groups of the keto-containing unsaturated monomer used as a constitutive monomer for the acrylic emulsion polymer (A). The hydrazide crosslinking agent(s), if present in an amount of less than 0.025 mole, may not exhibit sufficient effects. This may cause the pressure-sensitive adhesive layer or pressure-sensitive adhesive sheet to be peeled off heavily (with less releasability) and may cause low-molecular-weight components to remain in the polymer constituting the pressure-sensitive adhesive layer to often cause whitening as stains on the adherend. The hydrazide crosslinking agent(s), if present in an amount of more than 2.5 moles, may remain as unreacted crosslinking agent component(s) to cause staining.

For less staining, the pressure-sensitive adhesive composition according to the present invention is preferably incorporated with no quaternary ammonium salt and more preferably incorporated with no quaternary ammonium compound. Specifically, the pressure-sensitive adhesive composition according to the present invention preferably contains substantially no quaternary ammonium salt and more preferably contains substantially no quaternary ammonium compound. These compounds are generally used as catalysts for improving the reactivity of epoxy crosslinking agents. The compounds, however, are not integrated into the polymer constituting the pressure-sensitive adhesive layer, can migrate freely in the pressure-sensitive adhesive layer, and are liable to precipitate to the adherend surface. For these reasons, the pressure-sensitive adhesive composition, if containing any of the compounds, may often cause whitening as stains to fail to less causes staining. Specifically, the pressure-sensitive adhesive composition according to the present invention has a quaternary ammonium salt content of preferably less than 0.1 percent by weight, more preferably less than 0.01 percent by weight, and furthermore preferably less than 0.005 percent by weight, based on the total weight (100 percent by weight) of non-volatile components in the pressure-sensitive adhesive composition. More preferably, the pressure-sensitive adhesive composition has a quaternary ammonium compound content falling within the above-specified range.

Examples of the quaternary ammonium salt include, but are not limited to, compounds represented by the following formula:

[Chem. 1]

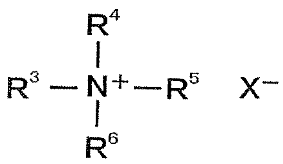

In the formula, each of $R^3$, $R^4$, $R^5$, and $R^6$ independently represents not hydrogen atom, but an alkyl group, an aryl group, or a group derived from them (e.g., a substituted alkyl or aryl group); and $X^-$ represents a counter ion.

The quaternary ammonium salt and the quaternary ammonium compound are typified by, but are not limited to, alkylammonium hydroxides such as tetramethylammonium hydroxide (TMAH), tetraethylammonium hydroxide, tetrapropylammonium hydroxide, and tetrabutylammonium hydroxide, and salts of them; arylammonium hydroxides such as tetraphenylammonium hydroxide, and salts of them; and bases and salts of them, which bases include, as a cation, any of trilaurylmethylammonium ion, didecyldimethylammonium ion, dicocoyldimethylammonium ion, distearyldimethylammonium ion, dioleyldimethylammonium ion, cetyltrimethylammonium ion, stearyltrimethylammonium ion, behenyltrimethylammonium ion, cocoylbis(2-hydroxyethyl)methylammonium ion, polyoxyethylene(15) cocostearylmethylammonium ion, oleylbis(2-hydroxyethyl)methylammonium ion, cocobenzyldimethylammonium ion, laurylbis(2-hydroxyethyl)methylammonium ion, and decylbis(2-hydroxyethyl)methylammonium ion.

Also for less staining, the pressure-sensitive adhesive composition according to the present invention is preferably incorporated with neither tertiary amines nor imidazole compounds. Such tertiary amines and imidazole compounds are generally used as catalysts for improving the reactivity of epoxy crosslinking agents as with the quaternary ammonium salts (or quaternary ammonium compounds). The pressure-sensitive adhesive composition according to the present invention preferably contains substantially no tertiary amine and substantially no imidazole compound. Specifically, the pressure-sensitive adhesive composition according to the present invention has a content of tertiary amines and imidazole compounds (total content of tertiary amines and imidazole compounds) of preferably less than 0.1 percent by weight, more preferably less than 0.01 percent by weight, and furthermore preferably less than 0.005 percent by weight, based on the total weight (100 percent by weight) of non-volatile components in the pressure-sensitive adhesive

composition.

Exemplary tertiary amines include tertiary amine compounds such as triethylamine, benzyldimethylamine, and α-methylbenzyl-dimethylamine. Exemplary imidazole compounds include 2-methylimidazole, 2-heptadecylimidazole, 2-phenylimidazole, 4-ethylimidazole, 4-dodecylimidazole, 2-phenyl-4-hydroxymethylimidazole, 2-ethyl-4-hydroxymethylimidazole, 1-cyanoethyl-4-methyimidazole, and 2-phenyl-4,5-dihydroxymethylimidazole.

The pressure-sensitive adhesive composition according to the present invention may further contain any of other additives than those mentioned above, within ranges not adversely affecting the less-staining properties. Exemplary additives include pigments, fillers, leveling agents, dispersing agents, plasticizers, stabilizers, antioxidants, ultraviolet absorbers, ultraviolet stabilizers, age inhibitors, and antiseptic agents.

The leveling agents are exemplified by, but are not limited to, acetylenic diol compounds (diol compounds having an acetylene bond in the molecule) and fluorocarbon-modified polyacrylates. The amount (content in the pressure-sensitive adhesive composition according to the present invention) of the leveling agent(s) is preferably from 0.01 to 10 parts by weight, and more preferably from 0.1 to 5 parts by weight, per 100 parts by weight of the acrylic emulsion polymer (A). Each of different leveling agents may be used alone or in combination.

The pressure-sensitive adhesive composition according to the present invention may be prepared by mixing the acrylic emulsion polymer (A) and the compound (B) with each other. Where necessary, the pressure-sensitive adhesive composition may be prepared by further mixing the water-insoluble crosslinking agent (C), another crosslinking agent, and additives in addition to the above components. The mixing may be performed according to any known or customary process for mixing an emulsion with other components, but is preferably performed by stirring with a stirrer. The stirring is not limited in conditions, but may be performed at a temperature of preferably from 10°C to 50°C and more preferably from 20°C to 35°C, for a duration of preferably from 5 to 30 minutes and more preferably from 10 to 20 minutes, at a rate (number of revolutions) of preferably from 10 to 2000 rpm and more preferably from 30 to 1000 rpm.

The compound (B) may be added at any time not limited during the mixing. Typically, the compound (B) may be added during the polymerization to form the acrylic emulsion polymer (A) or may be added to and mixed with the acrylic emulsion polymer (A) after polymerization. The water-insoluble crosslinking agent (C) may be added at any time not limited, but is preferably added immediately before the application of the pressure-sensitive adhesive composition, for a satisfactory pot life.

The pressure-sensitive adhesive composition thus obtained is applied to at least one side of a substrate (also referred to as a "base material" or "supporting substrate"), dried according to necessity, to form a pressure-sensitive adhesive layer, and thereby yields a pressure-sensitive adhesive sheet according to the present invention. This is a pressure-sensitive adhesive sheet including a substrate and, on at least one side thereof, a pressure-sensitive adhesive layer formed from the pressure-sensitive adhesive composition according to the present invention. Crosslinking may be performed typically by heating the pressure-sensitive adhesive sheet after dehydration and drying in the drying step. The pressure-sensitive adhesive layer herein is preferably provided by a so-called direct application process in which the pressure-sensitive adhesive composition is directly applied to the surface of the substrate, as described above. This is because the pressure-sensitive adhesive layer herein has a high solvent-insoluble content and, if formed by a transfer process, may not exhibit sufficient anchoring capability (adhesion) to the substrate. In the transfer process, a pressure-sensitive adhesive layer is once provided on a release film and then transferred onto the substrate. It should be noted, however, that the pressure-sensitive adhesive sheet according to the present invention has only to be a pressure-sensitive adhesive sheet having a substrate and, at least on one side thereof, a pressure-sensitive adhesive layer formed from the pressure-sensitive adhesive composition according to the present invention, and is not limited in its production method.

The pressure-sensitive adhesive layer (after crosslinking) in the pressure-sensitive adhesive sheet according to the present invention has a thickness of preferably from 1 to 50 μm, more preferably from 1 to 35 μm, and furthermore preferably from 3 to 25 μm.

The pressure-sensitive adhesive layer (after crosslinking) has a solvent-insoluble content of preferably 90 percent by weight or more, and more preferably 95 percent by weight or more. The pressure-sensitive adhesive layer, if having a solvent-insoluble content of less than 90 percent by weight, may cause contaminants (stains) to migrate to the adherend in a larger amount to thereby cause whitening as stains or may have insufficient removability to cause heavy peeling.

The acrylic polymer (after crosslinking) constituting the pressure-sensitive adhesive layer has a glass transition temperature of preferably from -70°C to -10°C, more preferably from -70°C to -20°C, furthermore preferably from - 70°C to -40°C, and most preferably from -70 to -60°C. The acrylic polymer, if having a glass transition temperature of higher than -10°C, may cause the pressure-sensitive adhesive layer to have an insufficient adhesive strength to cause gaps and/or separation typically upon working. The acrylic polymer, if having a glass transition temperature of lower than -70°C, may cause the pressure-sensitive adhesive layer to suffer from heavy peeling when peeled off at higher peel rates (at higher tensile speeds) to invite insufficient working efficiency. The glass transition temperature of the acrylic polymer (after crosslinking) constituting the pressure-sensitive adhesive layer may also be controlled typically by the

monomer formulation upon preparation of the acrylic emulsion polymer (A).

The substrate for use in the pressure-sensitive adhesive sheet according to the present invention is preferably a plastic substrate (e.g., a plastic film or plastic sheet) for allowing the pressure-sensitive adhesive sheet to have high transparency. Exemplary materials for the plastic substrate include, but are not limited to, transparent resins including polyolefins (polyolefin resins) such as polypropylenes and polyethylenes; polyesters (polyester resins) such as poly (ethylene terephthalate)s (PETs); polycarbonates; polyamides; polyimides; acrylic resins; polystyrenes; acetate resins; poly(ether sulfone)s; and triacetyl cellulose resins. Each of such resins may be used alone or in combination. Though not limited, polyester resins and polyolefin resins are preferred among these resins, of which PETs, polypropylenes, and polyethylenes are more preferred for satisfactory productivity and formability (moldability). Specifically, the substrate is preferably any of polyester films and polyolefin films and is more preferably any of PET films, polypropylene films, and polyethylene films. The polypropylenes are typified by, but are not limited to, homopolypropylenes as homopolymers; random polypropylenes as $\alpha$-olefin random copolymers; and block polypropylenes as $\alpha$-olefin block copolymers. The polyethylenes are typified by low-density polyethylenes (LDPEs), high-density polyethylenes (HDPEs), and linear low-density polyethylenes (L-LDPEs). Each of these may be used alone or in combination. Though not critical, the substrate has a thickness of preferably from 10 to 150 $\mu$m, and more preferably from 30 to 100 $\mu$m.

A surface of the substrate on which the pressure-sensitive adhesive layer is to be provided has an arithmetic mean surface roughness (Ra) of preferably from 0.001 to 1 $\mu$m, and more preferably from 0.01 to 0.7 $\mu$m. The pressure-sensitive adhesive layer herein has a high solvent-insoluble content. Owing to this, the substrate, if having an arithmetic mean surface roughness Ra of more than 1 $\mu$m, may cause the pressure-sensitive adhesive layer (adhesive face) applied to such a rough surface of the substrate to have an insufficient precision in thickness (to have an uneven thickness) or to have insufficient anchoring capability with respect to the substrate. Such insufficient anchoring capability occurs because the pressure-sensitive adhesive to constitute the pressure-sensitive adhesive layer may fail to migrate into space among asperities on the substrate surface (e.g., film surface) and fail to ensure a sufficient contact area between the pressure-sensitive adhesive layer and the substrate. The substrate, if having an arithmetic mean surface roughness Ra of less than 0.001 $\mu$m, may often cause blocking, may cause insufficient handleability, or may impede industrial production thereof.

The surface of the substrate, on which the pressure-sensitive adhesive layer is to be provided, preferably has undergone an adhesion-promoting treatment such as acid treatment, base treatment, primer treatment, corona treatment, plasma treatment, or ultraviolet treatment typically for improving the adhesion to the pressure-sensitive adhesive layer. The pressure-sensitive adhesive sheet may further include an intermediate layer between the substrate and the pressure-sensitive adhesive layer. The intermediate layer has a thickness of preferably from 0.05 to 1 $\mu$m, and more preferably from 0.1 to 1 $\mu$m.

The pressure-sensitive adhesive sheet according to the present invention has an adhesive strength of preferably from 0.01 to 5 N/25 mm, more preferably from 0.02 to 3 N/25 mm, furthermore preferably from 0.03 to 2 N/25 mm, and most preferably from 0.04 to 1 N/25 mm. The adhesive strength is a peel strength measured in a 180-degree peel test, in which the pressure-sensitive adhesive sheet is once affixed to a polarizing plate (triacetyl cellulose (TAC) plate) (one having an arithmetic mean surface roughness Ra of 50 nm or less) and then peeled off from the polarizing plate at a tensile speed of 0.3 m/min. The pressure-sensitive adhesive sheet, if having an adhesive strength of more than 5 N/25 mm, may be excessively resistant to peeling off (may have insufficient removability) to cause insufficient productivity and handleability in production process of polarizing plates and liquid crystal display devices. The pressure-sensitive adhesive sheet, if having an adhesive strength of less than 0.01 N/25 mm, may suffer from gaps and/or separation and may exhibit an insufficient protecting capability as a surface-protecting pressure-sensitive adhesive sheet in the production process. The arithmetic mean surface roughness Ra may be measured typically by using the stylus-type surface profilometer "P-15" supplied by KLA-Tencor Corporation. Though measurement conditions are not limited, the surface roughness (arithmetic mean surface roughness Ra) may be measured in one scanning pass at a measurement length of 1000 $\mu$m and a scanning speed of 50 $\mu$m/second under a load of 2 mg.

The pressure-sensitive adhesive sheet according to the present invention satisfactorily less causes whitening as stains on the adherend. This may be evaluated typically in the following manner. The pressure-sensitive adhesive sheet is affixed to a polarizing plate (trade name "SEG1425DUHC," supplied by Nitto Denko Corporation) at a pressure (load) of 0.25 MPa and a rate of 0.3 m/min, left stand at 80°C for 4 hours, and then removed from the polarizing plate. The polarizing plate after the removal of the pressure-sensitive adhesive sheet is further left stand in an environment of 23°C and 90% relative humidity for 12 hours, and the surface thereof is observed. In this observation, preferably no whitening is observed in the polarizing plate surface. A pressure-sensitive adhesive sheet, if causing whitening of the adherend polarizing plate under high-humidity conditions after affixation and removal of the sheet, may stain the adherend to such an extent unsuitable as a surface-protecting film for an optical member.

The pressure-sensitive adhesive sheet may be formed into a roll. In this case, the sheet may be wound as a roll with the pressure-sensitive adhesive layer being protected by a release film (separator). The pressure-sensitive adhesive sheet may have a backing layer (e.g., release layer or antifouling layer) on its backside (side opposite to the

pressure-sensitive adhesive layer). The backing layer may be formed through a release treatment and/or an antifouling treatment typically with a release agent such as a silicone, a fluorine-containing compound, a long-chain alkyl, or a fatty acid amide; or a silica powder. Among such structures, the pressure-sensitive adhesive sheet preferably has a structure of [(pressure-sensitive adhesive layer)/(substrate)/(backing layer)].

The substrate in the pressure-sensitive adhesive sheet according to the present invention preferably has undergone an antistatic treatment. The antistatic treatment may be performed by a regular antistatic treatment process, is not limited, but may be performed typically by a process of providing an antistatic layer on the backside (side opposite to the pressure-sensitive adhesive layer) of the substrate, or a process of incorporating a kneading-type antistatic agent (electrification preventing agent) into the substrate.

The antistatic layer may be provided typically by applying an antistatic resin containing an antistatic agent alone or in combination with a resin component, applying an electroconductive resin composition containing an electroconductive material and a resin component, or applying an electroconductive polymer; or by performing vapor deposition or plating of an electroconductive material.

Examples of the antistatic agent include cationic antistatic agents having a cationic functional group (e.g., a primary, secondary, or tertiary amino group), such as quaternary ammonium salts and pyridinium salts; anionic antistatic agents having an anionic functional group, such as sulfonic acid salts, sulfuric ester salts, phosphonic acid salts, and phosphoric ester salts; amphoteric antistatic agents such as alkylbetaines and derivatives thereof, imidazoline and derivatives thereof, and alanine and derivatives thereof; nonionic antistatic agents such as amino-alcohols and derivatives thereof, glycerol and derivatives thereof, and polyethylene glycols and derivatives thereof; as well as ionic conductive polymers obtained by polymerization or copolymerization of a monomer or monomers having an ionic conductive group, as typified by the cationic antistatic agents, anionic antistatic agents, and amphoteric antistatic agents.

Specifically, the cationic antistatic agents are exemplified by alkyltrimethylammonium salts; acyloylamidopropyltrimethylammonium methosulfates; alkylbenzylmethylammonium salts; acylcholine chlorides; (meth)acrylate copolymers having quaternary ammonium groups, such as poly(dimethylaminoethyl methacrylate)s; styrenic copolymers having quaternary ammonium groups, such as poly(vinylbenzyltrimethylammonium chloride)s; and diallylamine copolymers having quaternary ammonium groups, such as poly(diallyldimethylammonium chloride)s. The anionic antistatic agents are exemplified by alkylsulfonic acid salts, alkylbenzenesulfonic acid salts, alkyl sulfate salts, alkyl ethoxysulfate salts, alkyl phosphate salts, and sulfo-containing styrenic copolymers. The amphoteric antistatic agents are typified by alkylbetaines, alkylimidazolium betaines, and carbobetaine graft copolymers. The nonionic antistatic agents are typified by fatty acid alkylolamides, di-(2-hydroxyethyl)alkylamines, polyoxyethylene alkylamines, fatty acid glycerol esters, polyoxyethylene glycol fatty acid esters, sorbitan fatty acid esters, polyoxysorbitan fatty acid esters, polyoxyethylene alkyl phenyl ethers, polyoxyethylene alkyl ethers, polyethylene glycols, polyoxyethylenediamines, copolymers formed from a polyether, a polyester, and a polyamide, and methoxypolyethylene glycol (meth)acrylates.

The electroconductive polymer is typified by polyanilines, polypyrroles, and polythiophenes.

Exemplary electroconductive materials include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys or mixtures of them.

The resin component may be any of general-purpose resins such as polyesters, acrylic resins, vinyl polymers, urethane resins, melamine resins, and epoxy resins. The antistatic resin, when containing a polymeric antistatic agent as the antistatic agent, does not have to further contain the resin component. The antistatic resin may further contain, as a crosslinking agent, a compound such as methylolated or alkylolated melamine, urea, glyoxal, or acrylamide compound, as well as an epoxy compound or an isocyanate compound.

The antistatic layer, when to be formed by coating, may be formed by diluting the antistatic resin, the electroconductive polymer, or the electroconductive resin composition with a solvent or dispersion medium, such as an organic solvent or water, to give a coating composition, applying the coating composition to the substrate, and drying the applied layer. The organic solvent is exemplified by methyl ethyl ketone, acetone, ethyl acetate, tetrahydrofuran, dioxane, cyclohexanone, n-hexane, toluene, xylene, methanol, ethanol, n-propanol, and isopropyl alcohol. Each of these may be used alone or in combination. The coating may be performed according to a known coating procedure such as roll coating, gravure coating, reverse coating, roll brush coating, spray coating, air knife coating, impregnation, or curtain coating.

The antistatic layer formed by coating (antistatic resin layer, electroconductive polymer layer, or electroconductive resin composition layer) has a thickness of preferably from 0.001 to 5 $\mu$m, and more preferably from 0.005 to 1 $\mu$m.

Exemplary procedures for the vapor deposition or plating of the electroconductive material include vacuum deposition, sputtering, ion plating, chemical vapor deposition, spray pyrolysis, chemical plating, and electroplating.

The antistatic layer formed by vapor deposition or plating (electroconductive material layer) has a thickness of preferably from 20 to 10000 angstroms, and more preferably from 50 to 5000 angstroms.

Any of the antistatic agents may be used as the kneading-type antistatic agent. The kneading-type antistatic agent is incorporated in an amount of preferably 20 percent by weight or less, and more preferably from 0.05 to 10

percent by weight, based on the total weight (100 percent by weight) of the substrate. The way to incorporate the kneading-type antistatic agent into the substrate is not limited, as long as the kneading-type antistatic agent can be uniformly mixed with, for example, a resin for constituting a plastic substrate, and is generally exemplified by a process using a heating roll, Banbury mixer, press kneader, or double-screw kneader.

The pressure-sensitive adhesive composition according to the present invention is a pressure-sensitive adhesive composition capable of forming a pressure-sensitive adhesive layer having excellent adhesiveness and satisfactory removability (easy peelability) and being removable, and the composition is preferably used for the formation of a removable pressure-sensitive adhesive layer that is used in applications where the pressure-sensitive adhesive layer will be removed. Specifically, the pressure-sensitive adhesive sheet having a pressure-sensitive adhesive layer formed from the pressure-sensitive adhesive composition may be used in applications where the sheet will be removed. Exemplary applications include masking tapes such as masking tapes for protection or curing in construction, masking tapes for automobile painting, masking tapes for electronic components (e.g., lead frames and printed circuit boards), and masking tapes for sand blasting; surface-protecting films such as surface-protecting films for aluminum sash, surface-protecting films for optical plastics, surface-protecting films for optical glass, surface-protecting films for automobiles, and surface-protecting films for metal plates; pressure-sensitive adhesive tapes for production processes of semiconductor/electronic components, such as backgrinding tapes, pellicle-fixing tapes, dicing tapes, lead-frame-fixing tapes, cleaning tapes, dedusting tapes, carrier tapes, and cover tapes; packaging tapes for electronic appliances and electronic components; temporal tacking tapes used upon transportation; binding tapes; and labels.

The pressure-sensitive adhesive sheet according to the present invention also less suffers from appearance defects such as "dimples" in the pressure-sensitive adhesive layer and has a good appearance. The pressure-sensitive adhesive sheet, when used as being affixed to an adherend, does not cause stains, such as whitening, on the adherend and satisfactorily less causes staining. For these reasons, the pressure-sensitive adhesive sheet according to the present invention is preferably used particularly for surface protection of optical members (e.g., optical plastics, optical glass, and optical films), typically as a surface-protecting film for an optical member. This is because pressure-sensitive adhesive sheets for use in such optical members should have good appearances and should cause less staining. Exemplary optical members include polarizing plates, retardation films, anti-reflective films, wave plates, compensation films, and brightness enhancing films for constituting panels typically of liquid crystal displays, organic electroluminescence (organic EL) displays, and field emission displays. However, the pressure-sensitive adhesive sheet can also be used for other applications not limited to the above ones and can be used typically for surface-protection, failure-prevention, removal of foreign matter, or masking upon production of microfabricated components of semiconductors (semiconductor devices), circuits, printed circuit boards, masks, and lead frames.

EXAMPLES

The present invention will be illustrated in further detail with reference to several working examples below. It should be noted, however, that these examples are never construed to limit the scope of the present invention. All parts and percentages below are by weight, unless otherwise specified.

EXAMPLE 1

(Preparation of Acrylic Emulsion Polymer (A))

In a vessel were placed 90 parts by weight of water, as well as constitutive monomers and an emulsifier in amounts given in Table 1, and they were mixed with stirring using a homomixer to yield a monomer emulsion.
Next, 50 parts by weight of water, 0.01 part by weight of a polymerization initiator (ammonium persulfate), and the above-prepared monomer emulsion in an amount corresponding to 10 percent by weight thereof were placed in a reactor equipped with a condenser, a nitrogen inlet tube, a thermometer, and a stirrer, followed by emulsion polymerization with stirring at 65°C for one hour. Another portion (0.05 part by weight) of the polymerization initiator (ammonium persul) was further added, and all the residual monomer emulsion (in an amount corresponding to 90 percent by weight) was added with stirring over 3 hours, followed by a reaction at 75°C for 3 hours. This was cooled to 30°C, combined with a 10 percent by weight ammonia water to be adjusted to pH 8, and thereby yielded a water dispersion of acrylic emulsion polymer having a concentration of the acrylic emulsion polymer of 41 percent by weight.

(Preparation of Water-dispersible Acrylic Pressure-sensitive Adhesive Composition)

To 244 parts by weight of the above-prepared (41 percent by weight) water dispersion of acrylic emulsion polymer (to 100 parts by weight of the acrylic emulsion polymer) were added and mixed 0.1 part by weight of a copolymer [trade name "ADEKA PLURONIC 25R-1" supplied by ADEKA CORPORATION] as a compound (B), 4 parts by weight

of an epoxy crosslinking agent [trade name "TETRAD-C" supplied by Mitsubishi Gas Chemical Company, Inc., 1,3-bis (N,N-diglycidylaminomethyl)cyclohexane, having an epoxy equivalent of 110 and a number of functional groups of 4] as a water-insoluble crosslinking agent (C), and 0.2 part by weight of a leveling agent [trade name "EFKA-3570" supplied by BASF SE] with stirring using a stirrer under conditions of 23°C and 300 rpm for 10 minutes, and thereby yielded a water-dispersible acrylic pressure-sensitive adhesive composition.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100N38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

EXAMPLES 2 to 9 and COMPARATIVE EXAMPLES 1 to 4

Water dispersions of acrylic emulsion polymers were prepared by the procedure of Example 1, except for using, for example, constitutive monomers and emulsifier(s) of different types and/or in different amounts as indicated in Table 1. Next, water-dispersible acrylic pressure-sensitive adhesive compositions were prepared using the above-prepared water dispersions of acrylic emulsion polymers by the procedure of Example 1, except for using, for example, a copolymer as a compound (B) and a water-insoluble crosslinking agent (C) of different types and/or in different amounts as indicated in Table 1. Except for using these water-dispersible acrylic pressure-sensitive adhesive compositions, pressure-sensitive adhesive sheets were produced by the procedure of Example 1.
Comparative Example 1 employed no copolymer serving as the compound (B), and Comparative Examples 2 to 4 respectively employed compounds other than the compound (B), instead of the copolymer serving as the compound (B).
The acrylic emulsion polymers obtained in the examples and comparative examples had solvent-insoluble contents as indicated in Table 1.

[Evaluations]

The pressure-sensitive adhesive sheets obtained in the examples and comparative examples were evaluated according to the following measurement or evaluation methods. The evaluation results are indicated in Table 1.

(1) Staining (Whitening) [High-humidity Test]

Each of the pressure-sensitive adhesive sheets obtained in the examples and comparative examples (sample size: 25 mm wide by 100 mm long) was affixed to a polarizing plate (trade name "SEG1425DUHC" supplied by Nitto Denko Corporation, 50 mm wide by 150 mm long) at a pressure (load) of 0.25 MPa and a rate of 0.3 m/min. using a laminator (tabletop laminator, supplied by Tester Sangyo Co., Ltd.).
The polarizing plate with the pressure-sensitive adhesive sheet being affixed thereto was as intact left stand at 80°C for 4 hours, followed by removal of the pressure-sensitive adhesive sheet therefrom. The resulting polarizing plate, from which the pressure-sensitive adhesive sheet had been removed, was left stand in a high-humidity environment (at 23°C and 90% relative humidity) for 12 hours, the surface of which was visually observed, and whether and how the polarizing plate was stained was evaluated according to the following criteria:

No staining (Good): No change was observed in a region where the pressure-sensitive adhesive sheet had been affixed, as compared to a region where the pressure-sensitive adhesive sheet had not been affixed.
Slight staining (Fair): The region where the pressure-sensitive adhesive sheet had been affixed was slightly whitened.
Staining (Poor): The region where the pressure-sensitive adhesive sheet had been affixed was significantly whitened.

(2) Resistance to Increase in Adhesive Strength

(Initial Adhesive Strength)

Each of the pressure-sensitive adhesive sheets prepared in the examples and comparative examples (sample size: 25 mm wide by 100 mm long) was affixed to a polarizing plate at a pressure (load) of 0.25 MPa and a rate of 0.3 m/min using a laminator (tabletop laminator, supplied by Tester Sangyo Co., Ltd.) to give a laminated sample. The polarizing plate is made from a triacetyl cellulose (TAC) and has an arithmetic mean surface roughness Ra of about 21

nm in the machine direction (MD), about 31 nm in the transverse direction (TD), and about 26 nm on an average of the machine direction and the transverse direction.
The laminated sample of the pressure-sensitive adhesive sheet and the polarizing plate was left stand in an environment of 23°C and 60% relative humidity for 20 minutes, subjected to a 180-degree peel test under conditions mentioned below to measure an adhesive strength (N/25 mm) of the pressure-sensitive adhesive sheet to the polarizing plate, and the measured adhesive strength was defined as an "initial adhesive strength."

(Adhesive Strength After Affixation/Storage at 40°C for One Week)

Each of the pressure-sensitive adhesive sheets prepared in the examples and comparative examples (sample size: 25 mm wide by 100 mm long) was affixed to a polarizing plate at a pressure (load) of 0.25 MPa and a rate of 0.3 m/min using a laminator (tabletop laminator, supplied by Tester Sangyo Co., Ltd.). The polarizing plate was made from a material triacetyl cellulose (TAC) and had an arithmetic mean surface roughness Ra of about 21 nm in the machine direction, about 31 nm in the transverse direction, and about 26 nm on an average of the machine direction and the transverse direction.
The laminated sample of the pressure-sensitive adhesive sheet and the polarizing plate was stored in an environment of 40°C for one week, left stand in an environment of 23°C and 60% relative humidity for 20 minutes, subjected to a 180-degree peel test under conditions mentioned below to measure an adhesive strength (N/25 mm) of the pressure-sensitive adhesive sheet to the polarizing plate, and the measured adhesive strength was defined as an "adhesive strength after affixation/storage at 40°C for one week."
The 180-degree peel test was performed using a tensile tester in an environment of 23°C and 60% relative humidity at a tensile speed of 0.3 m/min.
A sample can be evaluated as being satisfactorily resistant to increase in adhesive strength when having a difference of 0.10 N/25 mm or less between the initial adhesive strength and the adhesive strength after affixation/storage at 40°C for one week [(adhesive strength after affixation/storage at 40°C for one week)-(initial adhesive strength)].

(3) Appearance (Presence or Absence of Dimples and Bubbles)

The surface of the pressure-sensitive adhesive layer of each of the pressure-sensitive adhesive sheets prepared in the examples and comparative examples was visually observed, by which a number of defects (dimples and bubbles) in an observation area of 10 cm wide and 10 cm long was counted, and the appearance was evaluated according to the following criteria:

Good appearance (Good): The sample had a number of defects of from 0 to 50;
Somewhat poor appearance (Fair): The sample had a number of defects of from 51 to 100; and
Poor appearance (Poor) : The sample had a number of defects of 101 or more.

[Table 1]

(TABLE 1)

| | | | Ex.1 | Ex. 2 | Ex. 3 | Ex. 4 | Ex. 5 | Ex. 6 | Ex. 7 | Ex. 8 | Ex. 9 | Com. Ex.1 | Com. Ex.2 | Com. Ex. 3 | Com. Ex. 4 |
|---|---|---|---|---|---|---|---|---|---|---|---|---|---|---|---|
| Acrylic emulsion polymer (A) | Constitutive monomer (part by weight) | 2EHA | 96 | 96 | 92 | 96 | 92 | 96 | 92 | 96 | 96 | 96 | 96 | 96 | 96 |
| | | MMA | | | 4 | | 4 | | 4 | | | | | | |
| | | AA | 4 | 4 | 4 | 4 | 4 | 4 | 4 | 4 | 4 | 4 | 4 | 4 | 4 |
| | Polymerization initiator (part by weight) | Ammonium persulfate | 0.06 | 0.06 | 0.06 | 0.06 | 0.06 | 0.06 | 0.06 | 0.06 | 0.06 | 0.06 | 0.06 | 0.06 | 0.06 |
| | Emulsifier (part by weight) | SE-10N | 3 | | | | | | | | | | | | |
| | | HS-10 | | 3 | 3 | 3 | 3 | 3 | 3 | 3 | 3 | 3 | 3 | 3 | 3 |
| | Solvent-insoluble content (% by weight) of acrylic emulsion polymer (A) | | 85 | 83 | 85 | 83 | 85 | 83 | 85 | 83 | 83 | 83 | 83 | 83 | 83 |

(continued)

| | | | Ex.1 | Ex. 2 | Ex. 3 | Ex. 4 | Ex. 5 | Ex. 6 | Ex. 7 | Ex. 8 | Ex. 9 | Com. Ex.1 | Com. Ex.2 | Com. Ex. 3 | Com. Ex. 4 |
|---|---|---|---|---|---|---|---|---|---|---|---|---|---|---|---|
| Water-dispersible acrylic pressure-sensitive adhesive composition | Acrylic emulsion polymer (A) (part by weight) | | 100 | 100 | 100 | 100 | 100 | 100 | 100 | 100 | 100 | 100 | 100 | 100 | 100 |
| | Compound (B) (part by weight) | ADEKA PLURONIC 25R-1 | 0.1 | 0.1 | 0.1 | 0.5 | 0.5 | 3 | 3 | | | | | | |
| | | ADEKA PLURONIC 25R-2 | | | | | | | | 0.1 | | | | | |
| | | ADEKA PLURONIC 17R-3 | | | | | | | | | 0.1 | | | | |
| | Compound other than compound (B) (part by weight) | NEWPOL PP-3000 | | | | | | | | | | | 0.1 | | |
| | | ADEKA PLURONIC F-108 | | | | | | | | | | | | 0.1 | |
| | | ADEKA PLURONIC L-65 | | | | | | | | | | | | | 0.1 |
| | Water-insoluble crosslinking agent (C) (part by weight) | TETRAD-C | 4 | 3 | 3 | 3 | 3 | 3 | 3 | 3 | 3 | 3 | 3 | 3 | 3 |
| | Leveling agent (part by weight) | EFKA-3570 | 0.2 | 0.2 | 0.2 | 0.2 | 0.2 | 0.2 | 0.2 | 0.2 | 0.2 | 0.2 | 0.2 | 0.2 | 0.2 |
| | [Number of moles of epoxy groups (glycidylamino groups)]/(Number of moles of carboxyl groups) (molar ratio) | | 0.7 | 0.5 | 0.5 | 0.5 | 0.5 | 0.5 | 0.5 | 0.5 | 0.5 | 0.5 | 0.5 | 0.5 | 0.5 |

(continued)

| | | | Ex.1 | Ex. 2 | Ex. 3 | Ex. 4 | Ex. 5 | Ex. 6 | Ex. 7 | Ex. 8 | Ex. 9 | Com. Ex.1 | Com. Ex.2 | Com. Ex. 3 | Com. Ex. 4 |
|---|---|---|---|---|---|---|---|---|---|---|---|---|---|---|---|
| Evaluation results | Resistance to increase in adhesive strength | Initial adhesive strength (N/25 mm) | 0.05 | 0.08 | 0.08 | 0.05 | 0.05 | 0.03 | 0.04 | 0.06 | 0.09 | -(*1) | -(*1) | -(*1) | 0.06 |
| | | Adhesive strength after storage at 40°C for one week (N/25 mm) | 0.06 | 0.08 | 0.08 | 0.06 | 0.05 | 0.04 | 0.04 | 0.07 | 0.1 | -(*1) | -(*1) | -(*1) | 0.08 |
| | Staining | | Good | Good | Good | Good | Good | Fair | Fair | Good | Good | Good | Good | Poor | Poor |
| | Appearance | | Good | Good | Good | Good | Good | Good | Good | Good | Good | Poor | Poor | Poor | Fair |

(*1): No measurement was performed because of appearance defects (poor appearance) of the sample.

The abbreviations used in Table 1 are as follows.
Hereinafter the ratio of the "total weight of EOs" to the "total weight of the compound(s) (B)" is indicated as "EO content."

2EHA: 2-Ethylhexyl acrylate
AA: Acrylic acid
MMA: Methyl methacrylate
SE-10N: Trade name "ADEKA REASOAP SE-10N" (nonionic-anionic reactive emulsifier) supplied by ADEKA CORPORATION
HS-10: Trade name "AQUALON HS-10" (nonionic-anionic reactive emulsifier) supplied by Dai-ichi Kogyo Seiyaku Co., Ltd.
TETRAD-C: Trade name "TETRAD-C" (1,3-bis(N,N-diglycidylaminomethyl)cyclohexane, having an epoxy equivalent of 110 and a number of functional groups of 4) supplied by Mitsubishi Gas Chemical Company, Inc.
ADEKA PLURONIC 25R-1: Trade name "ADEKA PLURONIC 25R-1" (having a number-average molecular weight of 2800 and an EO content of 10 percent by weight) supplied by ADEKA CORPORATION
ADEKA PLURONIC 25R-2: Trade name "ADEKA PLURONIC 25R-2" (having a number-average molecular weight of 3100 and an EO content of 20 percent by weight) supplied by ADEKA CORPORATION
ADEKA PLURONIC 17R-3: Trade name "ADEKA PLURONIC 17R-3" (having a number-average molecular weight of 2000 and an EO content of 30 percent by weight) supplied by ADEKA CORPORATION
ADEKA PLURONIC L-65: Trade name "ADEKA PLURONIC L-65" (having a number-average molecular weight of 3500 and an EO content of 50 percent by weight, EO-PO-EO block copolymer) supplied by ADEKA CORPORATION
NEWPOL PP-3000: Trade name "NEWPOL PP-3000" (polypropylene glycol) supplied by Sanyo Chemical Industries, Ltd.
ADEKA PLURONIC F-108: Trade name "ADEKA PLURONIC F-108" (having a number-average molecular weight of 15500 and an EO content of 80 percent by weight, EO-PO-EO block copolymer) supplied by ADEKA CORPORATION
EFKA-3570: Neutralized, fluorocarbon-modified polymer, supplied by BASF SE
ADEKA PLURONIC L-65 and ADEKA PLURONIC F-108 each have a structure including a polyoxypropylene block and, on both sides thereof, polyoxyethylene blocks.

The results in Table 1 demonstrate as follows. The pressure-sensitive adhesive sheets (Examples 1 to 9) each having a pressure-sensitive adhesive layer formed from a pressure-sensitive adhesive composition satisfying the conditions specified in the present invention had good appearances and did not cause whitening as stains on the polarizing plates even in high-humidity environments after affixation and removal of the pressure-sensitive adhesive sheets, thus satisfactorily less causing staining. They had small increases in adhesive strength with time after the affixation.
By contrast, the samples not containing a compound (B) (Comparative Examples 1 to 4) failed to balance a good appearance and less-staining properties.
Following examples and comparative example were made to give pressure-sensitive adhesive sheets, and whether or not the pressure-sensitive adhesive sheets were whitened upon storage at high humidity was evaluated.

EXAMPLE 10

(Preparation of Water-dispersible Acrylic Pressure-sensitive Adhesive Composition)

The water dispersion of acrylic emulsion polymer obtained in Example 2 was mixed with, per 100 parts by weight (solids content) of the acrylic emulsion polymer, 1 part by weight of a product under the trade name "ADEKA PLURONIC 25R-1" [supplied by ADEKA CORPORATION] as a compound (B), 3 parts by weight of an epoxy crosslinking agent [trade name "TETRAD-C" supplied by Mitsubishi Gas Chemical Company, Inc., 1,3-bis(N,N-diglycidylaminomethyl) cyclohexane, having an epoxy equivalent of 110 and a number of functional groups of 4] as a water-insoluble crosslinking agent (C), and 0.2 part by weight of a leveling agent [trade name "EFKA-3570" supplied by BASF SE] by stirring at 300 rpm with a stirrer at 23°C for 10 minutes, and thereby yielded a water-dispersible acrylic pressure-sensitive adhesive composition.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100C38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

EXAMPLE 11

(Preparation of Water-dispersible Acrylic Pressure-sensitive Adhesive Composition)

The water dispersion of acrylic emulsion polymer obtained in Example 2 was mixed with, per 100 parts by weight (solids content) of the acrylic emulsion polymer, 0.5 part by weight of a product under the trade name "ADEKA PLURONIC 17R-3" [supplied by ADEKA CORPORATION] as a compound (B), 3 parts by weight of an epoxy crosslinking agent [trade name "TETRAD-C" supplied by Mitsubishi Gas Chemical Company, Inc., 1,3-bis(N,N-diglycidylaminomethyl) cyclohexane, having an epoxy equivalent of 110 and a number of functional groups of 4] as a water-insoluble crosslinking agent (C), and 0.2 part by weight of a leveling agent [trade name "EFKA-3570" supplied by BASF SE] by stirring at 300 rpm with a stirrer at 23°C for 10 minutes, further aged at 50°C for 3 days, and thereby yielded a water-dispersible acrylic pressure-sensitive adhesive composition.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100C38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

EXAMPLE 12

(Preparation of Water-dispersible Acrylic Pressure-sensitive Adhesive Composition)

The water dispersion of acrylic emulsion polymer obtained in Example 2 was mixed with, per 100 parts by weight (solids content) of the acrylic emulsion polymer, 0.5 part by weight of a poly(propylene glycol)-block-poly(ethylene glycol)-block-poly(propylene glycol) [supplied by Sigma-Aldrich Co. LLC., having a number-average molecular weight of 2000 and an EO content of 50 percent by weight] as a compound (B), 3 parts by weight of an epoxy crosslinking agent [trade name "TETRAD-C" supplied by Mitsubishi Gas Chemical Company, Inc., 1,3-bis(N,N-diglycidylaminomethyl) cyclohexane, having an epoxy equivalent of 110 and a number of functional groups of 4] as a water-insoluble crosslinking agent (C), and 0.2 part by weight of a leveling agent [trade name "EFKA-3570" supplied by BASF SE] by stirring at 300 rpm with a stirrer at 23°C for 10 minutes and thereby yielded a water-dispersible acrylic pressure-sensitive adhesive composition.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100C38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

COMPARATIVE EXAMPLE 5

(Preparation of Water-dispersible Acrylic Pressure-sensitive Adhesive Composition)

The water dispersion of acrylic emulsion polymer obtained in Example 2 was mixed with, per 100 parts by weight (solids content) of the acrylic emulsion polymer, 1 part by weight of a polyethylene glycol 400 [supplied by Tokyo Chemical Industry Co., Ltd., having a number-average molecular weight of 400], 3 parts by weight of an epoxy crosslinking agent [trade name "TETRAD-C" supplied by Mitsubishi Gas Chemical Company, Inc., 1,3-bis(N,N-diglycidylaminomethyl) cyclohexane, having an epoxy equivalent of 110 and a number of functional groups of 4] as a water-insoluble crosslinking agent (C), and 0.2 part by weight of a leveling agent [trade name "EFKA-3570" supplied by BASF SE] by stirring at 300 rpm with a stirrer at 23°C for 10 minutes and thereby yielded a water-dispersible acrylic pressure-sensitive adhesive composition.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100C38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

[Evaluations]

The pressure-sensitive adhesive sheets prepared in Examples 10 to 12 and Comparative Example 5 were evaluated according to the following measurement or evaluation method. The evaluation results are indicated in Table 2.

(4) Whitening of Pressure-sensitive Adhesive Sheet upon High-humidity Storage

Each of the pressure-sensitive adhesive sheets prepared in Examples 10 to 12 and Comparative Example 5 was left stand in an environment of 50°C and 95% relative humidity for 24 hours (as high-humidity storage), the haze of which was measured with the "DIGITAL HAZEMETER NDH-20D" supplied by Nippon Denshoku Industries Co., Ltd., and this was defined as a "haze after high-humidity storage." The measurement was performed within 3 minutes after the sample was recovered from the environment of 50°C and 95% relative humidity. As a comparison, the haze of the sample before high-humidity storage was also measured and defined as a "haze before high-humidity storage."
[Table 2]

(TABLE 2)

| | Haze (%) before high-humidity storage | Haze (%) after high-humidity storage |
|---|---|---|
| Example 10 | 2.4 | 2.5 |
| Example 11 | 2.4 | 2.6 |
| Example 12 | 2.4 | 2.6 |
| Comparative Example 5 | 2.4 | 17.6 |

The results in Table 2 demonstrate that the pressure-sensitive adhesive sheet according to the comparative example using, instead of a compound (B), a compound (polyethylene glycol) other than the compound (B) suffered from a large increase in haze after storage at high humidity, indicating that the pressure-sensitive adhesive sheet was whitened upon storage at high humidity.

Industrial Applicability

Pressure-sensitive adhesive compositions according to embodiments of the present invention give pressure-sensitive adhesive layers and, in turn, pressure-sensitive adhesive sheets having the pressure-sensitive adhesive layers, which have excellent removability, satisfactory adhesiveness, and good appearances, cause (leave) substantially no stain on the surface of an adherend after removal, and thus less cause staining. The pressure-sensitive adhesive layers and the pressure-sensitive adhesive sheets are also resistant to increase in adhesive strength to the adherend with time. For these reasons, the pressure-sensitive adhesive compositions according to the present invention are useful as pressure-sensitive adhesive compositions for the formation of pressure-sensitive adhesive layers of pressure-sensitive adhesive sheets which are used for the surface protection of optical films.

## Claims

1. A water-dispersible acrylic pressure-sensitive adhesive composition comprising an acrylic emulsion polymer (A) and a compound (B), the acrylic emulsion polymer (A) being formed from constitutive monomers essentially containing a (meth)acrylic alkyl ester in a content of from 70 to 99.5 percent by weight and a carboxyl-containing unsaturated monomer in a content of from 0.5 to 10 percent by weight, each based on the total amount of the constitutive monomers, and the compound (B) being represented by following Formula (I) :

$$R^1O\text{-}(PO)_a\text{-}(EO)_b\text{-}(PO)_c\text{-}R^2 \qquad (I)$$

wherein each of $R^1$ and $R^2$ independently represents a linear or branched chain alkyl group or hydrogen atom; PO represents oxypropylene group; EO represents oxyethylene group; and each of "a," "b," and "c" is independently a positive integer, where EO and POs are added in a block manner.

**2.** The water-dispersible acrylic pressure-sensitive adhesive composition according to claim 1, wherein the acrylic emulsion polymer (A) is a polymer polymerized with a reactive emulsifier containing a radically polymerizable functional group in the molecule.

**3.** The water-dispersible acrylic pressure-sensitive adhesive composition according to claim 1 or 2, further comprising a water-insoluble crosslinking agent (C) having, per molecule, two or more carboxyl-reactive functional groups being reactive with carboxyl group.

**4.** The water-dispersible acrylic pressure-sensitive adhesive composition according to claim 3, wherein the carboxyl-reactive functional groups of the water-insoluble crosslinking agent (C) are present in an amount of from 0.3 to 1.3 moles per mole of carboxyl group of the carboxyl-containing unsaturated monomer.

**5.** A pressure-sensitive adhesive sheet comprising a substrate and, on at least one side thereof, a pressure-sensitive adhesive layer formed from the water-dispersible acrylic pressure-sensitive adhesive composition of any one of claims 1 to 4.

**6.** The pressure-sensitive adhesive sheet according to claim 5, as a surface-protecting film for an optical member.

**INTERNATIONAL SEARCH REPORT**

International application No.
PCT/JP2011/059074

A. CLASSIFICATION OF SUBJECT MATTER
*C09J133/00*(2006.01)i, *C09J7/02*(2006.01)i, *C09J11/06*(2006.01)i, *C09J171/02*(2006.01)i

According to International Patent Classification (IPC) or to both national classification and IPC

B. FIELDS SEARCHED

Minimum documentation searched (classification system followed by classification symbols)
C09J133/00, C09J7/02, C09J11/06, C09J171/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-515294 A (3M INNOVATIVE PROPERTIES CO.), 26 May 2005 (26.05.2005), & WO 2003/062343 A1 & US 2003/175503 A1 & AU 2002351244 A1 & EP 1465961 A1 & BR 200215444 A & TW 200302260 A & CN 1615350 A & MX 2004006835 A1 & DE 60223079 A | 1-6 |
| A | JP 2003-503539 A (3M INNOVATIVE PROPERTIES CO.), 28 January 2003 (28.01.2003), & WO 2000/78884 A1 & AU 9948260 A & BR 9917378 A & EP 1190010 A1 & US 6518343 B1 & MX 2001013066 A1 & DE 69923712 A & CA 2375654 A & ZA 200109978 A & ES 2237122 A | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 June, 2011 (14.06.11) | 28 June, 2011 (28.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/059074

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-200230 A (ROHM & HAAS CO.), 19 July 1994 (19.07.1994), & EP 593231 A1 & BR 9304230 A & AU 9349012 A & CA 2107702 A & FI 9304547 A & ZA 9307631 A & CZ 9302164 A3 & SK 9301124 A3 & HU 67866 A & CN 1087105 A & DE 69306723 A | 1-6 |
| A | JP 7-504213 A (AVERY DENNISON CORP.), 11 May 1995 (11.05.1995), & WO 93/11187 A1 & AU 9332428 A & EP 615530 A1 & FI 9402652 A & DE 69228612 A & ES 2128413 A & CA 2125185 A | 1-6 |
| A | JP 2006-111856 A (Nitto Denko Corp.), 27 April 2006 (27.04.2006), & US 2006/057371 A1 & EP 1640427 A1 & CN 1749345 A & KR 2006-051342 A & TW 200619341 A | 1-6 |
| A | JP 2009-062482 A (Kao Corp.), 26 March 2009 (26.03.2009), (Family: none) | 1-6 |
| A | JP 2-021907 A (Dai-Ichi Kogyo Seiyaku Co., Ltd.), 24 January 1990 (24.01.1990), (Family: none) | 1-6 |
| A | JP 2000-254409 A (Asahi Denka Co., Ltd.), 19 September 2000 (19.09.2000), (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1196 A
- JP 2001064607 A
- JP 2001131512 A
- JP 2003027026 A
- JP 3810490 B
- JP 2004091563 A
- JP 2006169496 A
- JP 2007031585 A